# EUROPÄISCHE PATENTANMELDUNG

(11) **EP 1 160 160 A2**
(43) Veröffentlichungstag der Anmeldung: **05.12.2001**
(21) Anmeldenummer: 01104081.3
(22) Anmeldetag: 21.02.2001
(51) Int. Cl.: B64D 11/00, B60K 35/00

(54) **Vorrichtung zur Steuerung und Überwachung von Flugzeug-Kabinensystemen**

(30) Priorität: 31.05.2000 DE 10026788; 04.01.2001 DE 10100273
(71) Anmelder: EADS Airbus GmbH, 21129 Hamburg (DE); KID-Systeme GmbH, 21614 Buxtehude (DE)
(72) Erfinder: Kopitze, Kirsten, 22147 Hamburg (DE); Frey, Martin, 21244 Buchholz (DE); Holst, Jörg, 21629 Neu Wulmstorf (DE); Riedel, Christian, 21640 Bliedersdorf (DE)
(74) Vertreter: Hansmann, Dierk, Dipl.-Ing.

(57) **Zusammenfassung**

Vorrichtung zur Steuerung und Überwachung von Flugzeug-Kabinensystemen, vorzugsweise der Funktionen von Informations-, Audio-, Beleuchtungs-, Tür-, Wasser- oder Abwassersystemen.

Um eine Anpassung an vorgegebene Anforderungen und auch eine Überwachung von Kabinensystemen zu ermöglichen, ist eine Vorrichtung mit einer, einen Flüssigkristall-Bildschirm und eine oberflächensensitive Eingabevorrichtung aufweisenden Bedieneroberfläche für ein Flugbegleiter-Bedienungsgerät vorgesehen. Der Flüssigkristall-Bildschirm der Bedieneroberfläche weist ein Basislayout mit einer Anzeigefläche und mit als Tastschalter ausgebildeten System- und Funktionssymbolen auf. Hierbei sind dem Basislayout mindestens zwei Systemmenüs, die jeweils einem Kabinensystem zugeordnet und auf der Anzeigefläche des Basislayouts abbildbar sind, zur Auswahl, Steuerung und Überwachung der Funktionen ihrer zugeordneten Kabinensysteme untergeordnet. Zwischen dem Basislayout und den Systemmenüs kann ein den Kabinenstatus wiedergebendes und auf der Anzeigefläche des Basislayouts abbildbares Hauptmenü angeordnet sein, welches die wesentlichen Informationen der Kabinensysteme zu ihrer Auswahl auf einer Menüseite darstellt.

## Beschreibung

Die Erfindung betrifft eine Vorrichtung zur Steuerung und Überwachung von Flugzeug-Kabinensystemen, vorzugsweise der Funktionen von Informations-, Audio-, Beleuchtungs-, Tür-, Wasser- oder Abwassersystemen sowie ein Verfahren zur Bedienung der Vorrichtung.

Heutige Kabinensysteme werden von Bediengeräten mit einfachen Tastaturen und relativ kleinen LCD's gesteuert und überwacht. Damit sind die technischen Möglichkeiten bezüglich Erweiterung, Flexibilität und Anpassung von heute genutzten Technologien erschöpft.

Der Erfindung liegt daher die Aufgabe zugrunde, eine Vorrichtung der eingangs genannten Art zu schaffen, welche an vorgegebene Anforderungen angepaßt werden kann und mit der auch eine Überwachung von Kabinensystemen ermöglicht wird.

Die Aufgabe wird erfindungsgemäß dadurch gelöst, daß eine, einen Flüssigkristall-Bildschirm und eine oberflächensensitive Eingabevorrichtung aufweisende Bedieneroberfläche für ein Flugbegleiter-Bedienungsgerät vorgesehen ist, daß der Flüssigkristall-Bildschirm der Bedieneroberfläche ein Basislayout mit einer Anzeigefläche und mit als Tastschalter ausgebildeten System- und Funktionssymbolen aufweist, und daß dem Basislayout mindestens zwei Systemmenüs, die jeweils einem Kabinensystem zugeordnet und auf der Anzeigefläche des Basislayouts abbildbar sind, zur Auswahl, Steuerung und Überwachung der Funktionen ihrer zugeordneten Kabinensysteme untergeordnet sind.

Erfindungsgemäße Weiterbildungen gehen dahin,
- daß zwischen dem Basislayout und den Systemmenüs ein den Kabinenstatus wiedergebendes und auf der Anzeigefläche des Basislayouts abbildbares Hauptmenü angeordnet ist, welches die wesentlichen Informationen der Kabinensysteme zu ihrer Auswahl auf einer Menüseite darstellt, und
- daß das Basislayout eine Kopfzeile zur Bezeichnung der aktivierten Menüs aufweist.

Weitere Ausgestaltungen der Erfindung sind in den Unteransprüchen 4 bis 13 beschrieben.

Erfindungsgemäß wird ein Verfahren zur Bedienung der Vorrichtung mit die folgenden Verfahrensschritten vorgeschlagen:
a) zum Aufruf des Hauptmenüs oder eines Systemmenüs wird das zugeordnete Systemsymbol auf dem Basislayout oder dem Hauptmenü durch eine Bedienungsperson betätigt,
b) das Hauptmenü bzw. ein aufgerufenes Systemmenü wird auf dem Flüssigkristall-Bildschirm angezeigt, und
c) durch Betätigung von vorgegebenen Betriebszuständen zugeordneten Funktionssymbolen werden gewünschte Betriebszustände des zugeordneten Kabinensystems eingestellt.

Es wird eine Vorrichtung vorgeschlagen, bei der das Flugbegleiter-Bedienungsgerät vorteilhafterweise mit Hilfe der verwendeten Abtast-Bildschirm-Technologie universell an jeweilige unterschiedliche Anforderungen anpaßbar ist. Diese universelle Anpassung setzt eine geforderte Flexibilität voraus. Gleichzeitig ist die Schaffung einer Bedieneroberfläche von Vorteil, mit der die Steuerung und Überwachung von Flugzeug-Kabinensystemen ermöglicht wird. Hierbei erfüllt die Bedieneroberfläche folgende Vorteile:
- Wiedererkennung bekannter Funktionen bzw. Abläufe.
- Intuitiv richtige Eingaben, wozu kein Training erforderlich ist.
- Wiederverwendung von gleichen Elementen, wie Tasten, Symbolen usw.
- Bei der Verwendung von Farbbildschirmen die Einhaltung einer Farbphilosophie, d.h. von gleichen Farben für einen gleichen Zweck, Zustand oder für ein gleiches Ereignis.
- Abstimmung auf wechselnde Lichtverhältnisse in einer Flugzeugkabine.
- Verwendung von möglichst wenigen Untermenü-Ebenen zur Erzielung einer flachen Hierarchie.

In der Zeichnung ist ein Ausführungsbeispiel nach der Erfindung dargestellt, und zwar zeigt:
- Fig. 1:: das Basislayout einer Bedieneroberfläche, die einen Flüssigkristall-Bildschirm und eine oberflächensensitive Eingabevorrichtung aufweist,
- Fig. 2:: eine Darstellung der Menüstruktur von Hauptmenü und mehreren Systemmenüs,
- Fig. 3:: ein Schaubild der Vorrichtung in der Boot-Phase,
- Fig. 4:: das Hauptmenü mit 5 Beispielen für Kabinensysteme,
- Fig. 5:: ein Systemmenü für eine Audioanlage,
- Fig. 6:: ein Systemmenü für eine Beleuchtungsanlage,
- Fig. 7:: ein Systemmenü für alle Flugzeugtüren,
- Fig. 8:: ein Systemmenü für eine Wasser- bzw. Abwasseranlage,
- Fig. 9:: ein Systemmenü für eine Statusanzeige aller Kabinensysteme, und
- Fig. 10:: ein Systemmenü zur Programmierung von Kabinensystemen.

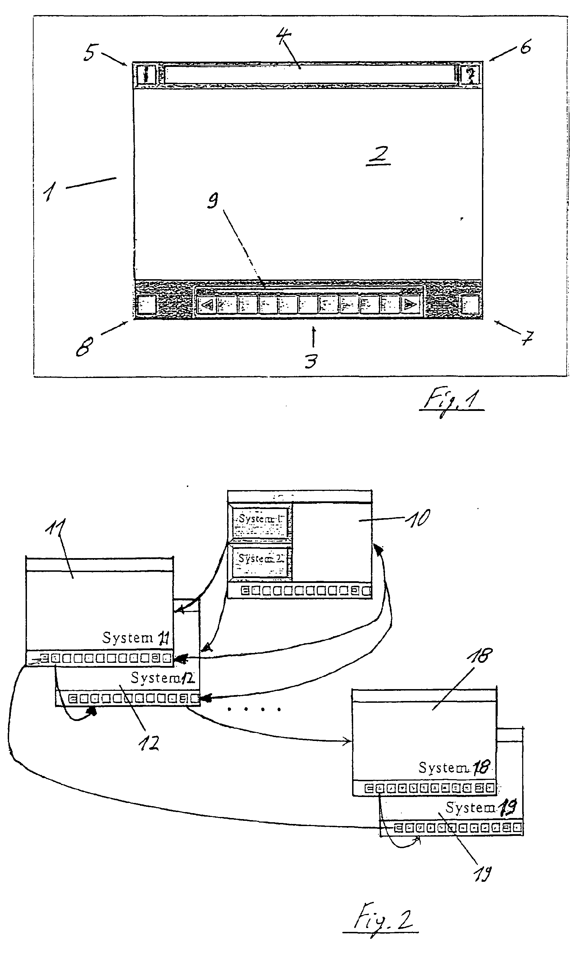

Das in Fig. 1 dargestellte Basislayout 1 einer einen Flüssigkristall-Bildschirm und eine oberflächensensitive Eingabevorrichtung aufweisenden Bedieneroberfläche für ein Flugbegleiter-Bediengerät ist vorzugsweise in drei Teile aufgeteilt, wobei die Bedieneroberfläche durch Abtast-Bildschirm-Technologie an unterschiedliche Anforderungen anpaßbar ist. Das Basislayout 1 weist eine Anzeigefläche 2, als Tastschalter ausgebildete System- und Funktionssymbole 3 und eine Kopfzeile 4 zur Bezeichnung des jeweils aktivierten Menüs auf. Hierbei handelt es sich um ein auf der Anzeigefläche 2 des Basislayouts 1 abbildbares Hauptmenü 10 (vgl. Fig. 2), welches den Kabinenstatus wiedergibt und welches die wesentlichen Informationen der Kabinensysteme zu ihrer Auswahl auf einer Menüseite darstellt, oder um ein von mindestens zwei Systemmenüs, die jeweils einem Kabinensystem zugeordnet und ebenfalls auf der Anzeigefläche des Basislayouts 1 abbildbar sind. Die Systemmenüs 11 bis 19 (vgl. Fig. 2) sind zur Auswahl, Steuerung und Überwachung der Funktionen ihrer zugeordneten Kabinensysteme dem Basislayout 1 untergeordnet, wobei vorteilhafterweise die Tastschalter des Basislayouts 1 bei jeder Abbildung eines Menüs auf der Anzeigefläche 2 für einen Benutzer zugänglich sind.

Wie aus Fig. 1 weiterhin zu entnehmen ist, sind bei dem Basislayout 1 zusätzlich ein Informationsschlüssel 5, eine Hilfetaste 6, ein Schalter 7 zum Aufruf des Hauptmenüs und ein Verriegelungs-Schalter 8 für den Bildschirm vorgesehen. Ein oberhalb der System- und Funktionssymbole 3 angeordneter "Scrollbar" 9 zeigt einer Bedienungsperson, daß weitere Menüsätze verfügbar sind, wobei die Länge der Elemente des "Scrollbars" annähernd die Anzahl der nächsten Menüsätze anzeigt.

Die in Fig. 2 dargestellte Menüstruktur zeigt das Hauptmenü 10 und mehrere Systemmenüs 11 bis 19, wobei der Schalter 7 zum Aufruf des Hauptmenüs, die System- und Funktionssymbole 3 und die Kopfzeile 4 des Basislayouts 1 beim Aufruf eines jeden Menüs erhalten bleiben. Dieses wird durch die Darstellung dieser Elemente in jedem gezeichneten Menü 11 bis 19 verdeutlicht. Das Hauptmenü 10 ist zwischen dem Basislayout 1 und den Systemmenüs 11 bis 19 angeordnet, deren Aufruf von einer Bedienungsperson durch manuelle Betätigung der als Tastschalter ausgebildeten System- und Funktionssymbole 3 erfolgt. Alternativ besteht jedoch auch die Möglichkeit, die Systemmenüs 11 bis 19 automatisch aufzurufen und auf der Anzeigefläche 2 des Basislayouts 1 abzubilden, gegebenenfalls nach einem bestimmten Ablaufplan. Mit Aufruf des Hauptmenüs 10 oder eines Systemmenüs 11 bis 19 wird das aufgerufene Menü auf der Anzeigefläche 2 des Basislayouts 1 und damit auf dem Flüssigkristall-Bildschirm angezeigt. Anschließend können durch Betätigung von Funktionssymbolen, die in den einzelnen Menüs angeordnet und vorgegebenen Betriebszuständen zugeordnet sind, gewünschte Betriebszustände des einem Systemmenü 11 bis 19 jeweilig zugeordneten Kabinensystems eingestellt werden.

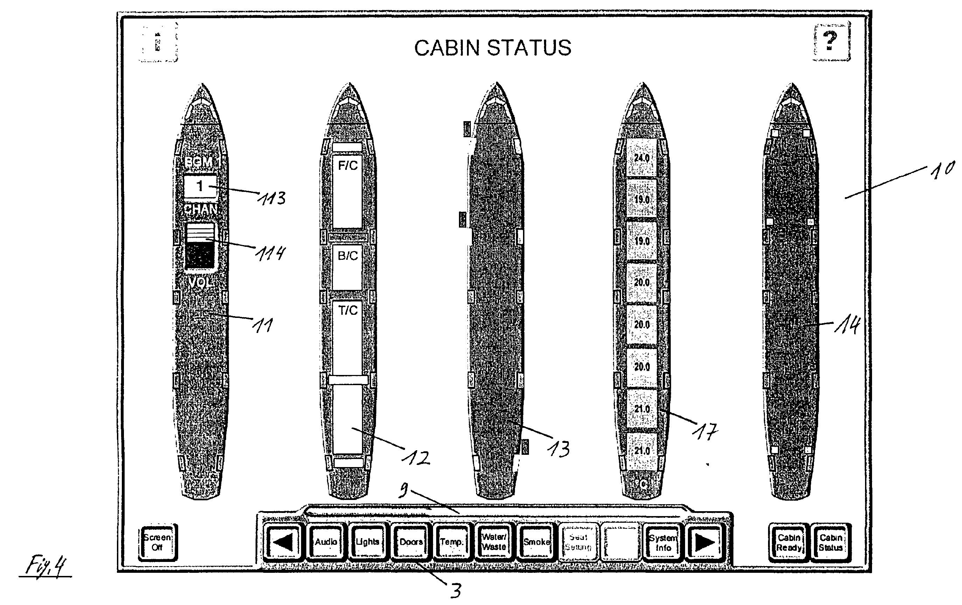

Weitere Vorteile der Erfindung, insbesondere im Hinblick auf die in den Fig. 4 bis 10 dargestellten Sytemmenüs, ergeben sich in der:
- Reduzierung der Anzahl von Einzelbediengeräten, d.h. ein Gerät ist für alle Kabinensysteme vorgesehen. Dieses führt zu einer Gewichts- und Kostenreduzierung, zur Einsparung von Verkabelungs- und Installationsaufwand und zu einer Vernetzungsmöglichkeit.
- Erfüllung der Spezifikation / Anforderungen zur Steuerung und Überwachung von Flugzeugkabinensystemen besonders für neue Großraumflugzeuge, z. B. für eine komplexe Beleuchtungssteuerung oder Klimaanlage, sowie der Schaffung einer offenen Schnittstelle für Serveranwendungen und der Software-Download-Fähigkeit.
- Flexibilität bei der Anpassung an Kundenwünsche, da Änderungen nur noch per Software und/oder Parameter im Kabinenzuweisungsmodul stattfinden. Eine Anpassung der Hardware (weder Gerät noch Einbauten) ist nicht mehr notwendig. Alle Erweiterungen und neuen Funktionen werden mit Hilfe der Software und/oder Parameter im Kabinenzuweisungsmodul realisiert. Auch besteht die Möglichkeit, daß jeder Kunde seine eigene Firmen-Identität umsetzen kann.

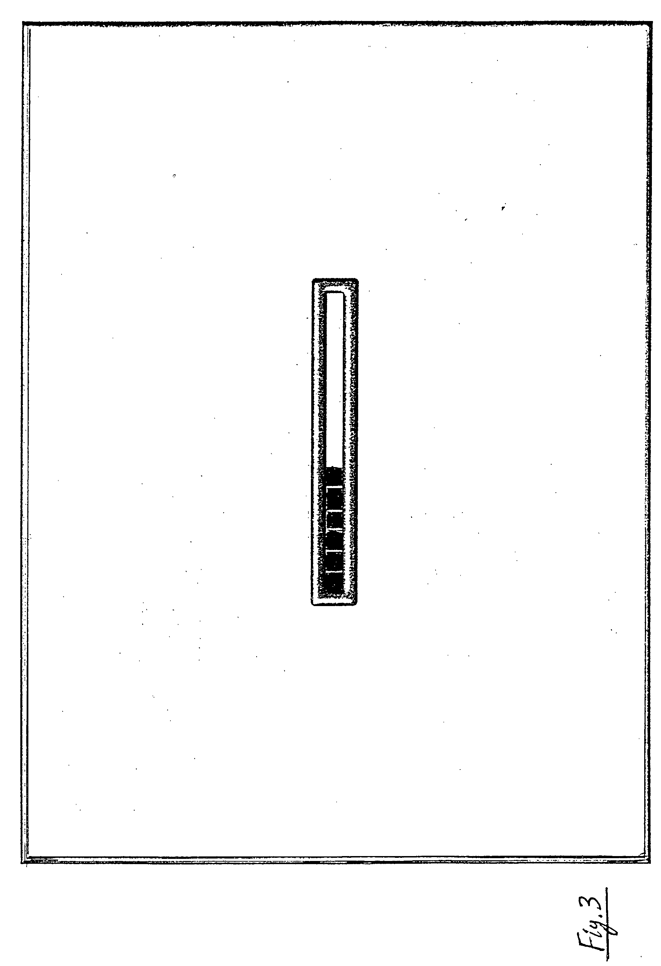

Das in Fig. 3 dargestellte Schaubild zeigt anhand einer stab förmigen Anzeige den Ladungszustand der Vorrichtung in der "Boot-Phase". Nach Beendigung des Ladungsvorganges wird vorzugsweise das aus Fig. 4 ersichtliche Hauptmenü 10 in der Anzeigefläche 2 des Basislayouts 1 abgebildet.

Das Hauptmenü 10 gemäß Fig. 4 gibt einen allgemeinen Überblick über den Kabinenstatus und enthält die wesentlichen Informationen der Kabinensysteme zwecks Auswahl derselben. Beispielsweise sind fünf verschiedene Sytemmenüs 11 bis 15 für die Kabinensysteme Audioanlage 11, Beleuchtungsanlage 12, Türen 13, Wasser/Abwasseranlage 14 und Temperatur-/ Klimaanlage 17 vorgesehen. Diese Systemmenüs sind auf der Anzeigefläche 2 abgebildet und von dort durch Abtast-BildschirmTechnologie direkt aufrufbar.

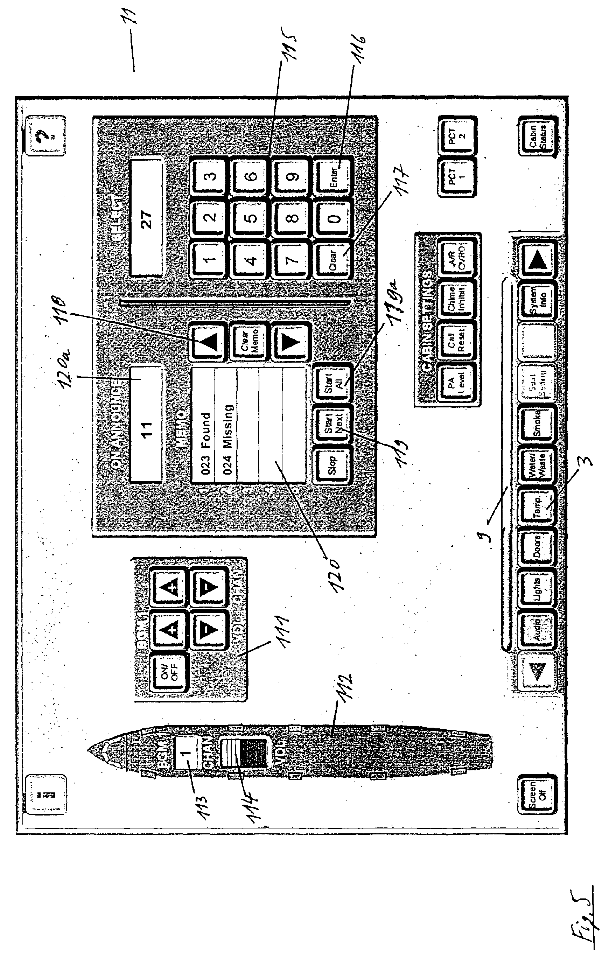

Das in Fig. 5 dargestellte Systemmenü 11 für eine Audioanlage steuert und überwacht vorher abgespeicherte Ansagen sowie die Einstellung des Bord-Musikkanals. Hierbei erfolgt die Einstellung des Musikkanals und der Lautstärke auf der linken Seite des Systemmenüs 11 mittels der +/-Tasten 111. Der aktuelle Status dieser Einstellungen ist in einem Flugzeugsymbol 112 dargestellt, wobei der jeweils gewählte Kanal bzw. die Lautstärke in den Einrichtungen 113 bzw. 114 angezeigt werden. Hingegen erfolgt das Auswählen von Ansagen auf der rechten Seite des Systemmenüs 11 durch Eingabe einer zugehörigen Nummer über die numerische Tastatur 115. Mit der Entertaste 116 wird eine aktuelle Eingabe in die Tastatur 115 bestätigt, während mit der Löschtaste 117 eine aktuelle Eingabe gelöscht wird. Mit den Pfeiltasten 118 können Ansagen gezielt ausgewählt und anschließend mit der Starttaste 119 abgespielt oder mit der Löschtaste 117 gelöscht werden. Mit der Starttaste 119a kann ein sequentielles Abspielen aller gespeicherten Ansagen gestartet werden, wobei die gespeicherten Ansagen in einem Sichtfenster 120 angezeigt werden und die Nummer der aktuellen Ansage in einem Anzeigefeld 120a oberhalb des Sichtfensters 120 erscheint. Zur Unterbrechung von Ansagen ist ein Stop-Schalter vorgesehen.

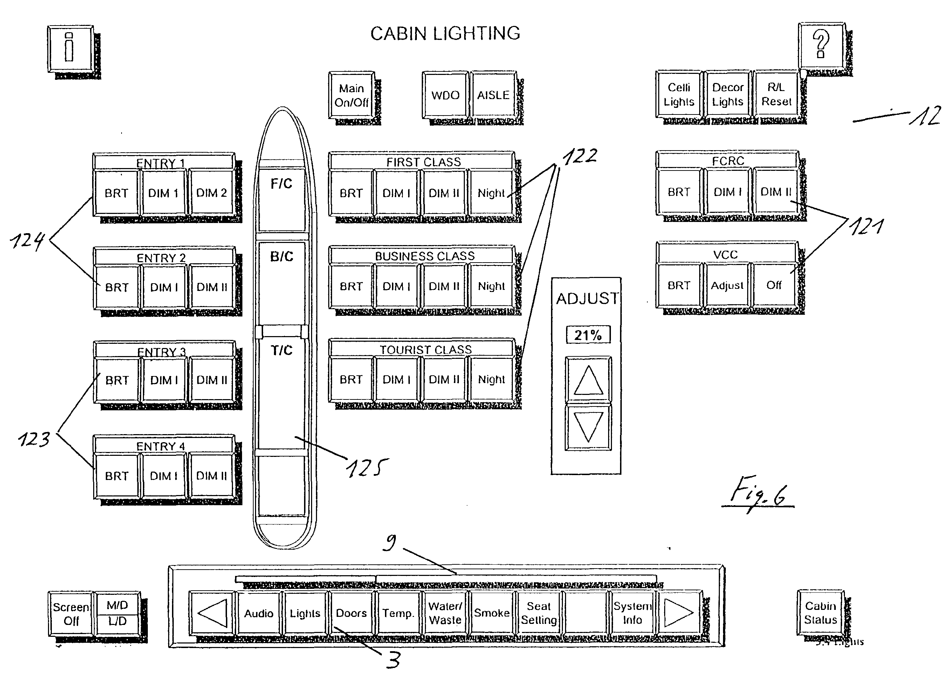

Das Systemmenü 12 aus Fig. 6 steuert die Beleuchtungsanlage in einer Flugzeugkabine. Es können Beleuchtungen für Eingangszonen, Kabinenzonen und/oder einzelne unabhängige Räume bzw. Bereiche geschaltet werden. Hierzu weist das Systemmenü 12 eine Reihe von Tastschaltern 121, 122, 123 und 124 auf, wobei vorzugsweise in den Kabinen-Eingangszonen die folgenden drei Helligkeitsstufen "Volle Beleuchtung", "Dimmstufe 1" und "Dimmstufe 2" einstellbar sind. Die aktuellen Beleuchtungseinstellungen sind in einem Flugzeugsymbol 125 darstellbar, welches zweckmäßigerweise in Beleuchtungszonen unterteilt ist.

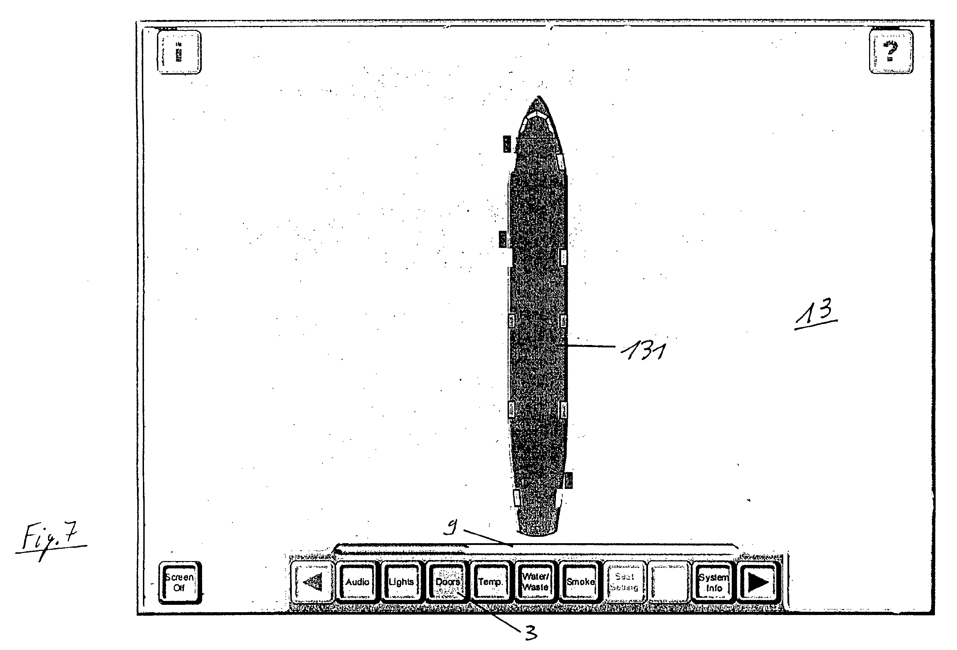

Das Systemmenü 13 gemäß Fig. 7 gibt den aktuellen Status von allen Kabinentüren und Klappen an, wobei ein Flugzeugsymbol 131 mit einer deutlichen Anzeige für die Türen und Notrutschen sowie deren Status verwendet wird. Es können zum Beispiel Anzeigen über geöffnete oder geschlossene Türen, über druckdichte oder druckundichte Türen bzw. über entriegelte oder verriegelte Türen erfolgen.

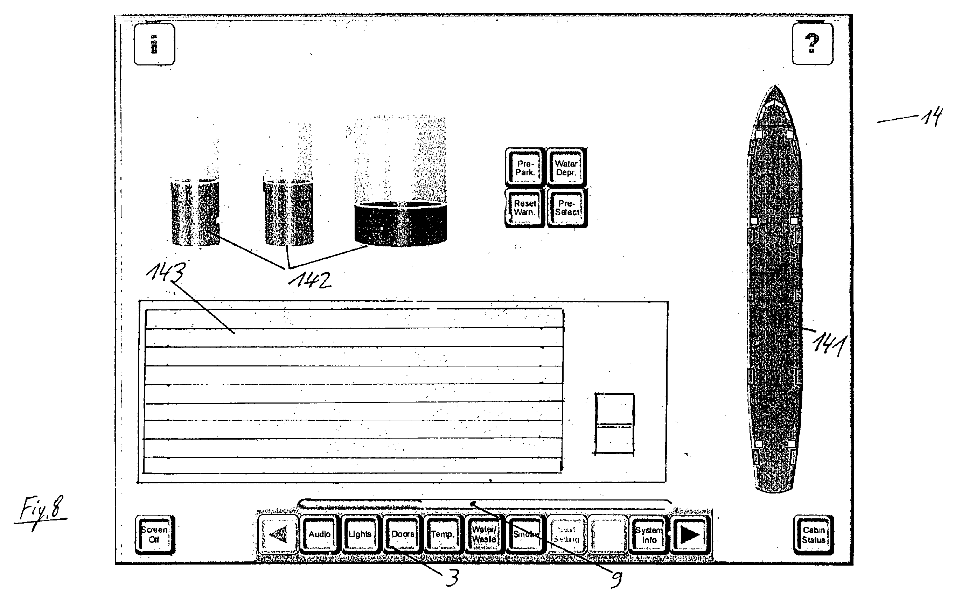

Das in Fig. 8 dargestellte Systemmenü 14 für eine Wasser-bzw. Abwasseranlage zeigt auf der rechten Seite ein Flugzeugsymbol 141, in dem die Lage aller Küchen und Toiletten eingezeichnet ist. Ersichtlich ist auch, ob die Küchen bzw. Toiletten infolge von Fehlern inaktiv sind. In dem oberen Teil des Menüs 14 sind die Tanks 142 für Wasser und Abwasser mit Volumenanzeigen dargestellt, wobei Pfeile vorgegebene Volumenwerte markieren. Weiterhin ist eine Anzeigevorrichtung 143 vorhanden, in der die aktuellen Statuswerte der genannten Baugruppen angezeigt werden. Eine Steuerung dieser Baugruppen kann durch eine Bedienungsperson über nicht näher bezeichnete Tastschalter erfolgen.

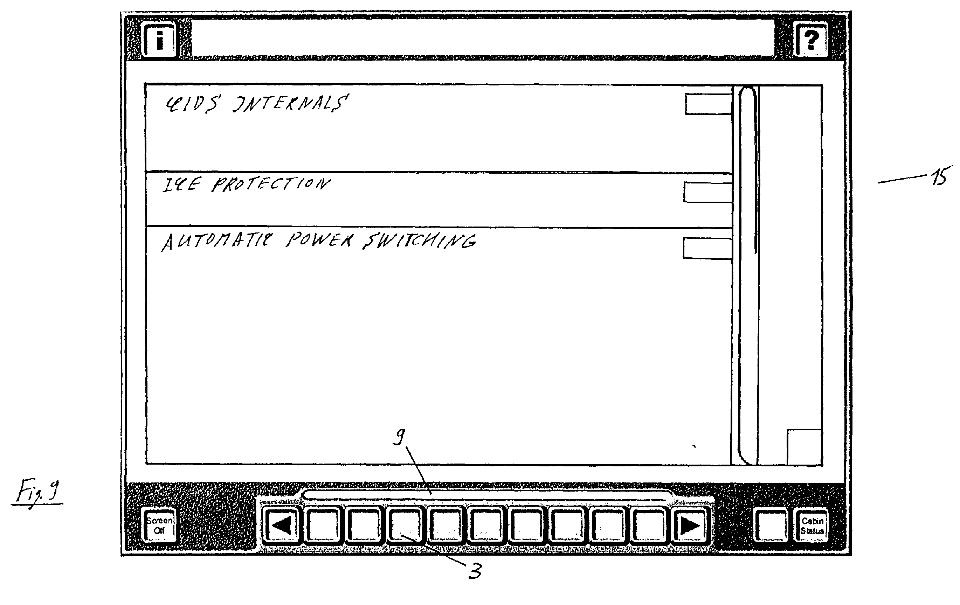

Gemäß Fig. 9 ist ein Systemmenü 15 vorgesehen, welches Statuswerte von verschiedenen Kabinensystemen anzeigt und vorzugsweise vor einem Abflug aufgerufen wird. Ein automatischer Aufruf dieses Menüs ist auch während aller Flugphasen von besonderem Vorteil, wenn die Flugzeugbesatzung Informationen über die einzelnen Systeme benötigt. Die Anzeige kann beispielsweise Angaben über das CIDS-System, über Eisschutzeinrichtungen oder über das Spannungsversorgungssytem enthalten.

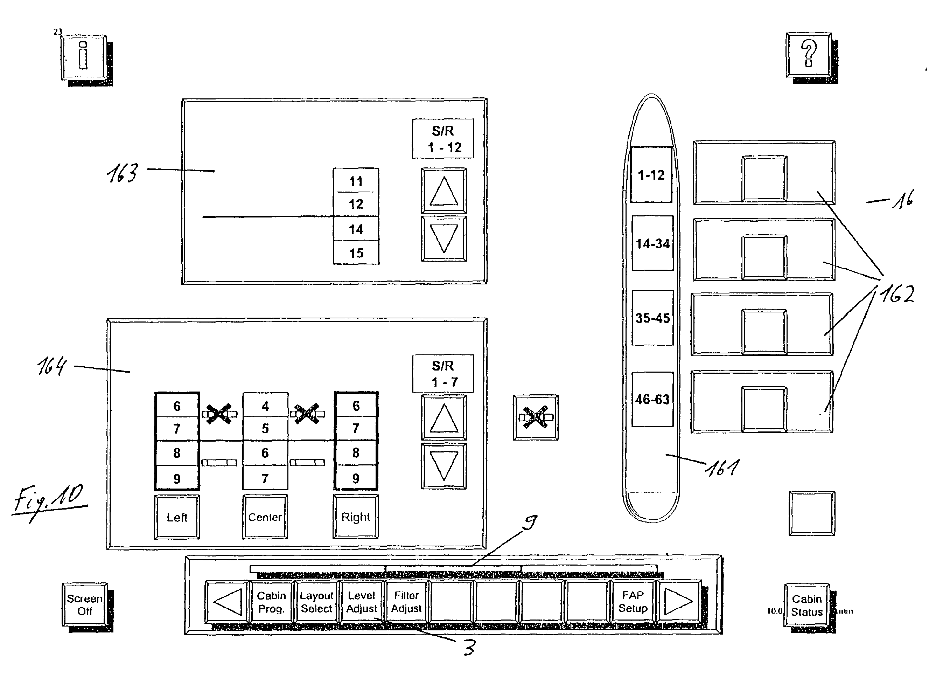

Das in Fig. 10 dargestellte Systemmenü 16 ist zur Programmierung von Kabinensystemen vorgesehen, vorzugsweise von Kabinenzonen. Ersichtlich sind ein Flugzeugsymbol 161 zur Darstellung von Kabinenzonen sowie Tastenfelder 162, 163 und 164 zur Eingabe von Programmierungsbefehlen.

### Bezugszeichenliste

- 1: Basislayout mit Anzeigefläche 2, System- und Funktionssymbolen 3, Kopfzeile 4, Informationsschlüssel 5, Hilfetaste 6, Hauptmenü-Schalter 7, Verriegelungs-Schalter 8 und Scrollbar 9

- 10: Hauptmenü
- 11 - 19: Systemmenüs für Audioanlage 11, Beleuchtungsanlage 12, Türen 13, Wasser-/Abwasseranlage 14, Statusanzeige aller Kabinensysteme 15, zur Programmierung von Kabinensystemen 16 und für Temperatur-/Klimaanlage 17

- 111: +/-Tasten
- 112: Flugzeugsymbol für das Systemmenü 11
- 113: Kanalanzeigeeinrichtung
- 114: Lautstärkenanzeigeeinrichtung
- 115: Numerische Tastatur
- 116: Entertaste
- 117: Löschtaste
- 118: Pfeiltasten
- 119 / 119a: Starttasten

- 120: Sichtfenster
- 120a: Anzeigefeld
- 121 - 124: Tastschalter
- 125: Flugzeugsymbol für das Systemmenü 12
- 131: Flugzeugsymbol für das Systemmenü 13

- 141: Flugzeugsymbol für das Systemmenü 14
- 142: Tanks für Wasser und Abwasser
- 143: Anzeigevorrichtung

- 161: Flugzeugsymbol für das Systemmenü 16
- 162 - 164: Tastenfelder zur Eingabe von Programmierbefehlen

## Patentansprüche

1. Vorrichtung zur Steuerung und Überwachung von Flugzeug-Kabinensystemen, vorzugsweise der Funktionen von Informations-, Audio-, Beleuchtungs-, Tür-, Wasser- oder Abwassersystemen, **dadurch gekennzeichnet, daß** eine, einen Flüssigkristall-Bildschirm und eine oberflächensensitive Eingabevorrichtung aufweisende Bedieneroberfläche für ein Flugbegleiter-Bedienungsgerät vorgesehen ist, daß der Flüssigkristall-Bildschirm der Bedieneroberfläche ein Basislayout (1) mit einer Anzeigefläche (2) und mit als Tastschalter ausgebildeten System- und Funktionssymbolen (3) aufweist, und daß dem Basislayout (1) mindestens zwei Systemmenüs (11 bis 19), die jeweils einem Kabinensystem zugeordnet und auf der Anzeigefläche (2) des Basislayouts (1) abbildbar sind, zur Auswahl, Steuerung und Überwachung der Funktionen ihrer zugeordneten Kabinensysteme untergeordnet sind.

2. Vorrichtung nach Anspruch 1, **dadurch gekennzeichnet, daß** zwischen dem Basislayout (1) und den Systemmenüs (11 bis 19) ein den Kabinenstatus wiedergebendes und auf der Anzeigefläche (2) des Basislayouts (1) abbildbares Hauptmenü (10) angeordnet ist, welches die wesentlichen Informationen der Kabinensysteme zu ihrer Auswahl auf einer Menüseite darstellt.

3. Vorrichtung nach Anspruch 1 oder 2, **dadurch gekennzeichnet, daß** das Basislayout (1) eine Kopfzeile (4) zur Bezeichnung des jeweils aktivierten Menüs (10 bis 19) aufweist.

4. Vorrichtung nach Anspruch 1, 2 oder 3, **dadurch gekennzeichnet, daß** die Tastschalter (3) des Basislayouts (1) bei jeder Abbildung eines Menüs (10 bis 19) auf der Anzeigefläche (2) des Basislayouts (1) für eine Bedienungsperson zugänglich sind.

5. Vorrichtung nach Anspruch 1, **dadurch gekennzeichnet, daß** die Bedieneroberfläche für das Flugbegleiter-Bedienungsgerät durch Abtast-Bildschirm-Technologie an unterschiedliche Anforderungen anpaßbar ist.

6. Vorrichtung nach Anspruch 1, 2, 3, 4 oder 5, **dadurch gekennzeichnet, daß** das Systemmenü (11) für die Audioanlage zur Auswahl und zur Wiedergabe von vorher abgespeicherten Ansagen sowie zur Einstellung des Bord-Musikkanals ausgebildet ist.

7. Vorrichtung nach Anspruch 6, **dadurch gekennzeichnet, daß** die Auswahl einer vorher abgespeicherten Ansage durch Eingabe einer zugehörigen Nummer auf einer numerischen Tastatur (115) erfolgt.

8. Vorrichtung nach Anspruch 6, **dadurch gekennzeichnet, daß** alle abgespeicherten Ansagen reihenfolgemäßig automatisch abrufbar und wiedergebbar sind.

9. Vorrichtung nach Anspruch 1, 2, 3, 4 oder 5, **dadurch gekennzeichnet, daß** das Systemmenü (12) für die Beleuchtungsanlage zur Beleuchtungssteuerung für verschiedene Kabinenzonen, Flächen oder Räume innerhalb der kompletten Kabine ausgelegt ist.

10. Vorrichtung nach Anspruch 9, **dadurch gekennzeichnet, daß** die Beleuchtungsanlage in den Kabinen-Eingangszonen in drei Helligkeitsstufen (Voll, Dimmstufe 1, Dimmstufe 2) mittels Tastschaltern (121 - 124) einstellbar ist.

11. Vorrichtung nach Anspruch 1, 2, 3, 4 oder 5, **dadurch gekennzeichnet, daß** das Systemmenü (13) für die Türen eine eindeutige Anzeige und den jeweils aktuellen Status aller Kabinentüren und Klappen angibt.

12. Vorrichtung nach einem der Ansprüche 1 oder 3 bis 11, **dadurch gekennzeichnet, daß** ein Systemmenü (15) für eine Statusanzeige aller Kabinensysteme vorgesehen ist.

13. Vorrichtung nach einem der Ansprüche 1 oder 3 bis 12, **dadurch gekennzeichnet, daß** ein Systemmenü (16) zur Programmierung von Kabinensystemen vorgesehen ist.

14. Verfahren zur Bedienung einer Vorrichtung nach einem der Ansprüche 1 bis 13, **gekennzeichnet durch** die folgenden Verfahrensschritte:
a) zum Aufruf des Hauptmenüs (10) oder eines Systemmenüs (11 bis 19) wird das zugeordnete Systemsymbol auf dem Basislayout (1) oder dem Hauptmenü (10) **durch** eine Bedienungsperson betätigt,
b) das Hauptmenü (10) bzw. ein aufgerufenes Systemmenü (11 bis 19) wird auf dem Flüssigkristall-Bildschirm angezeigt, und
c) **durch** Betätigung von vorgegebenen Betriebszuständen zugeordneten Funktionssymbolen werden gewünschte Betriebszustände des zugeordneten Kabinensystems eingestellt.
